# EUROPÄISCHE PATENTSCHRIFT

(11) **EP 2 811 286 B1**
(45) Veröffentlichungstag und Bekanntmachung des Hinweises auf die Patenterteilung: **04.11.2015**
(21) Anmeldenummer: 14170185.4
(22) Anmeldetag: 28.05.2014
(51) Int. Cl.: G01N 21/35, G01J 3/427, G01N 21/31, G01N 21/3504, G01J 3/08, G01J 3/10, G01J 3/42, G01N 21/33

(54) **Zweikanaliges Messgerät**
Two-channel measuring device
Appareil de mesure à deux canaux

(30) Priorität: 07.06.2013 EP 13171075; 21.05.2014 DE 202014102369 U
(43) Veröffentlichungstag der Anmeldung: 10.12.2014
(73) Patentinhaber: SICK AG, 79183 Waldkirch (DE)
(72) Erfinder: Disch, Rolf, 79356 Eichstetten (DE); Ortwein, Pascal, 79276 Reute (DE); Brüchig, Florian, 79241 Ihringen (DE)
(74) Vertreter: Ludewigt, Christoph

(56) Entgegenhaltungen:
- EP-A2- 0 238 871
- DD-A1- 148 385
- DE-B- 1 291 533
- US-A- 3 413 482
- US-A- 3 819 277

## Beschreibung

Die Erfindung betrifft ein zweikanaliges Messgerät zur Bestimmung von Gaskonzentrationen nach dem Oberbegriff des Anspruchs 1.

In einem Messgerät zur Bestimmung von Gaskonzentrationen, bei dem zwei spektrale Kanäle auf einen optischen Weg vereinigt werden, geschieht dies üblicherweise unter Einsatz von Strahlteilern. Hierzu ist es typischerweise notwendig auf der Senderseite zwei unterschiedliche Lichtquellen vorzusehen und deren Lichtstrahlen koaxial mittels Strahlteiler zusammenzuführen und auf Empfangsseite die spektralen Anteile auf (mindestens) zwei Detektoren wieder zu verteilen, also mittels Strahlteiler die spektralen Anteile wieder auf verschiedene optische Wege zu bringen.

Die Strahlteiler sind üblicherweise als geometrische oder dichroitische Teilerspiegel ausgeführt. Die geometrischen Strahlteiler sind über einen weiten Spektralbereich einsetzbar, erzeugen jedoch für jeden Durchgang einen Intensitätsverlust von im Mittel 50%. Dies bewirkt insgesamt sehr hohe Intensitätsverluste. Beim dichroitischen (oder Farb-) Teilerspiegel ist der Intensitätsverlust deutlich geringer - allerdings ist je nach Konstellation der Spektral- und Durchlassbereiche diese Lösung nicht realisierbar.

Aus der DE 39 26 090 C2, Fig. 4, ist ein Messgerät nach dem Oberbegriff des Anspruchs 1 bekannt. Bei diesem Messgerät erfolgt die spektrale Zusammenführung durch einen Chopper, der lichtreflektierende und lichtdurchlässige Sektoren aufweist und einer aufwändigen Anordnung von Hohlspiegeln. Mit "Zusammenführung" der Strahlen (spektralen Kanäle) ist hier aber nur gemeint, dass die Lichtstrahlen der Lichtquellen auf einen gemeinsamen optischen Weg gebracht werden. Eine Trennung der spektralen Kanäle erfolgt nicht. Stattdessen erfolgt eine spektrale Trennung in einem Monochromator, dem das Licht beider Lichtquellen auf dem gleichen Weg zugeführt wird und der eine spektrale Aufteilung zum separaten Nachweis macht. Nachteilig daran ist unter anderem, dass der Aufbau erstens aufgrund der großen Anzahl von Hohlspiegeln und zweitens wegen der umfangreichen Justagetätigkeit aufwändig ist. Des Weiteren kann der Monochromator in der Regel nur einen beschränkten Wellenlängenbereich aufnehmen und die Lichtausbeute für die verschiedenen Wellenlängen wird begrenzt sein.

DE 1 291 533 A offenbart in der dortigen Fig. 4 ein Spektrometer, bei dem mittels eines Chopperrades je nach Winkelstellung des Chopperrades das Licht einer Lichtquelle einmal auf einen optischen Weg geführt wird, der über eine Referenzküvette führt und ein anderes Mal auf einen optischen Weg, der über eine Messküvette führt. Das selbe Chopperrad führt die beiden Strahlengänge auch wieder zusammen auf einen Lichtempfänger. Somit wird je nach Winkelstellung des Chopperrades entweder eine Referenzmessung oder eine Messung des Messgases aufgenommen.

US 3,413,482 A offenbart ein Spektrometer, bei dem in dem Ausführungsbeispiel der dortigen Fig. 2 das Licht zweier Lichtquellen mittels eines Chopperrades auf den gleichen optischen Weg geführt wird, so dass je nach Winkelstellung des Chopperrades einmal das Licht der einen Lichtquelle und bei einer anderen Stellung das Licht der anderen Lichtquelle die Messzelle durchläuft.

EP 0 238 871 A2 offenbart eine Messvorrichtung zur Abgasanalyse, bei der mehrere Lichtquellen zur Analyse unterschiedlicher Gaskomponenten eingesetzt werden.

DD 148 385 A1 offenbart ein Spektrometer mit einem Chopperrad, das eine Aufteilung des Strahlenganges in einen Referenzstrahlengang und einen Messstrahlengang bewirkt.

Aus der US 3,819,277 ist ein gattungsgemäßes Messgerät gemäß dem Oberbegriff des Anspruchs 1 bekannt.

Ausgehend von diesem Stand der Technik ist es Aufgabe der Erfindung, ein verbessertes zweikanaliges Messgerät bereitzustellen, das einfach aufgebaut ist und bei dem nur geringe Lichtintensitätsverluste auftreten.

Diese Aufgabe wird mit einem Messgerät mit den Merkmalen des Anspruchs 1 gelöst.

Das erfindungsgemäße zweikanalige Messgerät zur Bestimmung von Gaskonzentrationen umfasst:
- eine erste und eine zweite Lichtquelle, die Licht unterschiedlicher Wellenlängenbereiche in eine Messstrecke senden,
- eine Empfangsanordnung, die das Licht der Lichtquellen empfängt,
- eine Choppervorrichtung, die zwei für einen der Wellenlängenbereiche hoch reflektierende Spiegel und zwei auf gleichem Teilkreis zwischen den Spiegeln liegende Durchbrüche aufweist, zum wechselweise Durchlassen bzw. Umlenken des Lichts der Lichtquellen, um das Licht auf den selben optischen Weg in die Messstrecke zu bringen
- und mit einer Auswerteeinheit zur Auswertung der Empfangssignale und Bestimmung einer Gaskonzentration daraus,
- wobei die Empfangsanordnung einen ersten und einen zweiten Empfänger aufweist,
- wobei der erste Empfänger der ersten Lichtquelle und der zweite Empfänger der zweiten Lichtquelle zugeordnet ist zum Empfang des Lichts entsprechender Wellenlänge
- und wobei die Choppervorrichtung auch Teil der Empfangsanordnung ist und die Choppervorrichtung das Licht nach Durchlaufen der Messstrecke durch Umlenken bzw. Durchlassen von demselben optischen Weg trennt und dem entsprechenden Empfänger zuordnet.
- Erfindungsgemäß ist die Choppervorrichtung als ein einziges Chopperrad ausgebildet und die Spiegel sind als Sektoren des Chopperrads ausgebildet, so dass die Spiegelflächen senkrecht zur Rotationsachse des Chopperrades liegen.

Da bei dem erfindungsgemäßen Messgerät keine Strahlteiler zur sendeseitigen Strahlzusammenführung und empfangsseitigen Strahltrennung eingesetzt werden, treten demzufolge keine dadurch bedingten Intensitätsverluste auf. Der optische Aufbau kann sehr einfach ausgestaltet sein. Für die Detektion des Lichtes der beiden Lichtquellen mit unterschiedlichen Wellenlängen, beispielsweise IR-Licht einerseits und UV-Licht andererseits, werden separate Empfänger eingesetzt, die durch wellenlängenselektierende Elemente speziell auf die entsprechende, zu detektierende Wellenlänge angepasst sein können, wodurch die Lichtausbeute der Empfänger optimal ausgebildet sein kann.

Ein weiterer Vorteil ist, dass mit der Erfindung ein zweikanaliges Messgerät geschaffen ist, bei dem die Lichtquellen permanent betrieben werden können und somit temperaturbedingte Stabilitätsprobleme reduziert werden können.

Das Chopperrad ist dabei sehr einfach aufgebaut. Es kann im Wesentlichen als einfaches Blatt mit verspiegelten Flächen als Spiegel und mit Durchbrüchen ausgebildet sein. Das ist nicht nur eine stabilere und weniger aufwändige Ausbildung der Choppervorrichtung als die aus der US 3,819,277 bekannte, sondern die Optik des erfindungsgemäßen Messgeräts lässt sich auch erheblich einfacher justieren.

In einer ersten Ausführungsform erfolgt eine koaxiale Strahlführung, d. h. der Sendelichtpfad und der Empfangslichtpfad sind zumindest innerhalb der Messstrecke koaxial ausgebildet. Das ist vorteilhaft, da dann Sendeeinheit und Empfangsanordnung auf einer Seite einer Messstrecke angeordnet sein können. Dazu ist hinter der Messstrecke ein Retroreflektor angeordnet, der das Licht in sich reflektiert. Dann ist ein Strahlteiler notwendig, um Sende- und Empfangslichtpfad zu trennen.

Vorteilhafterweise wird das erfindungsgemäße Messgerät eingesetzt, wenn eine der Lichtquellen UV-Licht abgibt und die andere IR-Licht, also die beiden Wellenlängen sehr weit voneinander entfernt sind. Der einer Lichtquelle jeweils zugeordnete Empfänger ist dementsprechend dazu ausgebildet, das UV-Licht bzw. IR-Licht zu empfangen.

In konstruktiv einfachster Weise ist die Choppervorrichtung punktsymmetrisch zu ihrer Rotationsachse ausgebildet.

In Weiterbildung der Erfindung sind die Spiegel auf dem Chopperrades diametral angeordnet und die Durchbrüche liegen ebenfalls einander diametral gegenüberliegend zwischen den Spiegeln. Eine derart symmetrische Anordnung ist konstruktiv und auch bezüglich der Signalauswertung vorteilhaft.

Ein einfacher und leicht zu realisierender Aufbau für das Messgerät ergibt sich, wenn die optischen Achsen der Lichtquellen senkrecht zueinander stehen.

Das erfindungsgemäß Messgerät gemäß Anspruch 1 kann für eine vorteilhafte Nullpunktskorrektur verwendet werden.

In der Regel waren Nullpunktskorrekturen bei optischen Gasmessgeräten sehr aufwändig. Die Nullpunktstabilität muss regelmäßig überprüft werden. Hierzu gehört eine sogenannte "Hellmessung" ohne die im Messbetrieb zu durchleuchtende Messstrecke. Hierbei werden die spektralen Eigenschaften möglichst vieler interner optischer Elemente überprüft. Spektrales Driften und/oder die Empfindlichkeit der Detektoren kann kontrolliert werden. Bisher war dies aufwändig, weil die Nullpunktskorrektur mittels Einschwenken eines Nullpunktreflektors am Ort des Strahlaustritts aus dem Gerät und vor der Messstrecke erfolgte. Die (externe) Messstrecke wird sozusagen "abgeschaltet". Diese Prozedur wurde bisher durchgeführt, indem der Nullpunktreflektor mittels einer Mechanik und eines Motors eingeschwenkt wird, was Bauraum, weitere mechanische, anfällige Teile und einen Motor mit Ansteuerung erforderte.

Die Nullpunktskorrektur kann nun viel einfacher ausgeführt werden. Dazu wird das Licht der ersten bzw. zweiten Lichtquelle, in denjenigen Messphasen, in denen mit Licht der jeweils anderen Lichtquelle gemessen wird, zur Nullpunktskorrektur verwendet. Durch angepasste Auswertung der Messsignale kann dann die Nullpunktskorrektur erfolgen. Auf ein Einschwenken eines separaten Nullpunktreflektors mit den beschriebenen Nachteilen kann vollständig verzichtet werden.

In Weiterbildung ist dazu ein einfacher Umlenkspiegel vorgesehen, mit dem abhängig von der Drehstellung des Chopperrades mal das Licht des einen Wellenlängenbereichs und mal das Licht des anderen Wellenlängenbereichs unter Umgehung der Messstrecke in die zugeordneten Empfänger führbar ist.

Das Licht geht somit nicht "verloren", denn entweder wird es in die Messstrecke gelenkt und dient zur Gaskonzentrationsmessung oder es wird über den Umlenkspiegel zur Nullpunktskorrektur verwendet.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer ersten bevorzugten Ausführungsform des erfindungsgemäßen Messgeräts;
- Fig. 2: eine Draufsicht auf ein Chopperrad der ersten bevorzugten Ausführungsform;

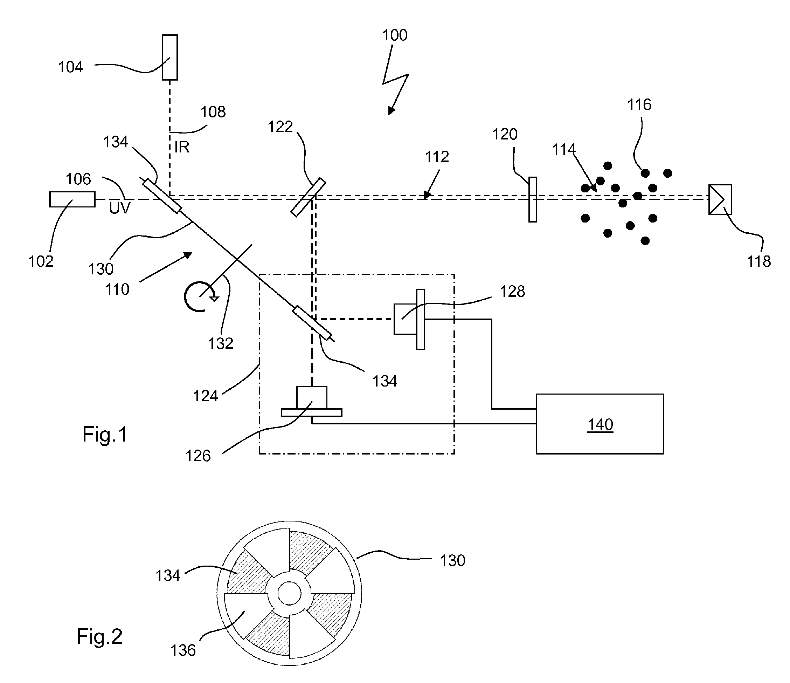

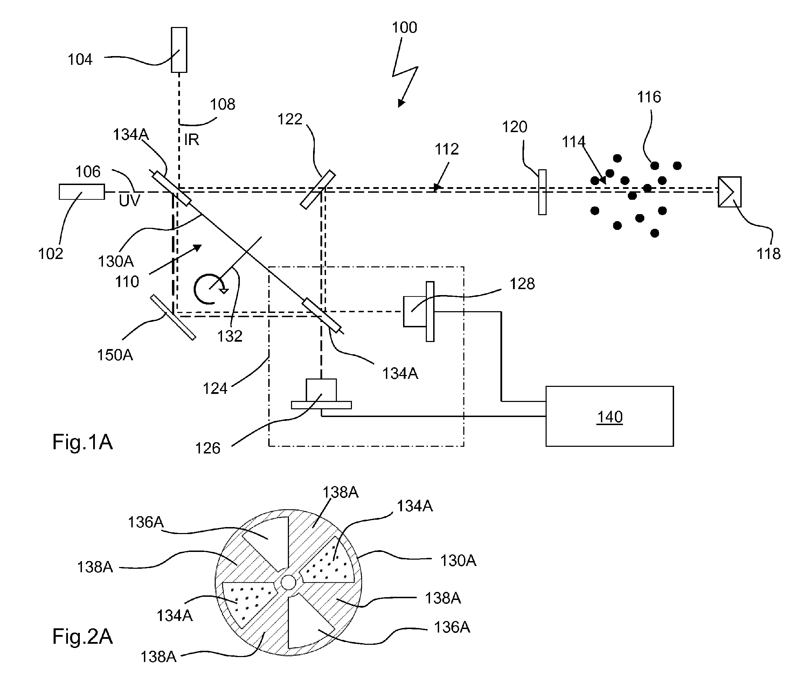

- Fig. 1A: eine schematische Darstellung der ersten bevorzugten Ausführungsform nach Fig.1 mit Maßnahmen zur Nullpunktskorrektur;
- Fig. 2A: eine Draufsicht auf ein Chopperrad, für die erste bevorzugte Ausführungsform aus Fig. 1A;

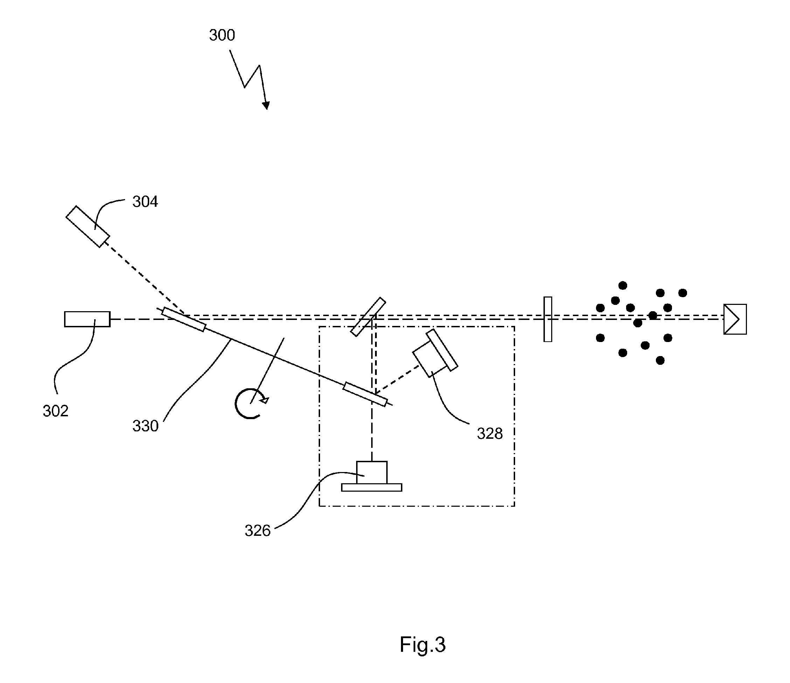

- Fig. 3: eine schematische Darstellung einer weiteren bevorzugten Ausführungsform des Messgeräts;

Das erfindungsgemäße Messgerät 100 zur Bestimmung von Gaskonzentrationen umfasst eine erste Lichtquelle 102 und eine zweite Lichtquelle 104, die Licht unterschiedlicher Wellenlängenbereiche in eine Messstrecke 114 senden. Beispielsweise sendet die erste Lichtquelle 102 UV-Licht aus, das in der Fig. 1 durch stärker (länger) gestrichelte Linien 106 dargestellt ist und die zweite Lichtquelle 104 sendet IR-Licht aus, das in der Fig. 1 durch fein (kürzer) gestrichelte Linien 108 dargestellt ist. Das Messgerät 100 hat damit zwei spektrale Kanäle.

Das Messgerät 100 umfasst weiter eine Choppervorrichtung 110, die im weiteren Text näher erläutert wird. Die Choppervorrichtung 110 bewirkt, dass entsprechend der Drehstellung wechselweise das UV-Licht 106 durchgelassen oder das IR-Licht 108 umgelenkt wird, um somit auf den selben optischen Weg 112 in eine Messstrecke 114 zu gelangen, wodurch eine Zusammenführung der spektralen Kanäle auf den selben optischen Weg erfolgt. In der Ausführungsform nach Fig. 1 ist die Choppervorrichtung 110 so angeordnet, dass das IR-Licht 108 um 90° umgelenkt wird, wobei die optischen Achsen der Lichtquellen 102 und 104 senkrecht zueinander stehen.

Auf der Messtrecke 114 erfolgt die eigentliche Reaktion des Lichts mit im Bereich der Messstrecke vorgesehenem Messgas (das Messgas ist in Fig. 1 durch Punkte 116 dargestellt), von dem Konzentrationen bestimmter Komponenten bestimmt werden sollen. Das Messgas kann sich dabei in einer nicht dargestellten Messküvette oder dergleichen befinden - oder auch in einer freien Strecke eines Abgaskanals. In Fig. 1 ist lediglich ein Fenster 120 einer möglichen Messküvette angedeutet.

Von den Lichtquellen aus gesehen befindet sich hinter der Messstrecke 114 ein Retroreflektor 118, der das UV- und das IR-Licht in sich reflektiert, so dass es noch mal die Messstrecke 114 auf demselben optischen Weg 112 durchläuft. Sendelicht-und Empfangslichtpfad sind damit zumindest innerhalb der Messstrecke 114 koaxial ausgebildet, was für beide Wellenlängenbereiche gilt.

Zur Trennung von Sende- und Empfangslicht ist ein Strahlteiler 122 vorgesehen, der das Empfangslicht um beispielsweise 90° umlenkt in Richtung einer Empfangsanordnung 124, die das Licht 106 und 108 der Lichtquellen 102 und 104 empfängt. Die Empfangsanordnung 124 weist dazu einen ersten Empfänger 126 auf, der der ersten Lichtquelle 102 zugeordnet ist, also das UV-Licht 106 der ersten Lichtquelle 102 detektieren kann. Weiter weist die Empfangsanordnung 124 einen zweiten Empfänger 128 auf, der der zweiten Lichtquelle 104 zugeordnet ist und der zum Empfang des IR-Lichts 108 dieser zweiten Lichtquelle 104 ausgebildet ist.

Sowohl das UV-Licht 106 als auch das IR-Licht 108 treten in die Empfangsanordnung 124 auf demselben optischen Pfad ein. Mittels der Choppervorrichtung 110, die auch Teil der Empfangsanordnung 124 ist, erfolgt eine optische Trennung der spektralen Kanäle von UV- und IR-Licht. Diese Trennung erfolgt in analoger Weise wie die Zusammenführung, also das UV-Licht wird entsprechend der Drehstellung auf den ersten Empfänger 126 durchgelassen und das IR-Licht wird bei anderer Drehstellung um 90° auf den zweiten Empfänger 128 umgelenkt.

Dazu ist die Choppervorrichtung 110 als Chopperrad 130 ausgebildet, das um eine Achse 132 rotiert. Wie in Fig. 2 dargestellt, weist das Chopperrad 130 für den einen Wellenlängenbereich - hier für das IR-Licht 108 - hoch reflektierende Spiegel 134 auf, die als Sektoren des Chopperrads 130 ausgebildet sind und von denen mehrere (wenigstens zwei) jeweils diametral angeordnet sind. Da die Spiegel als Sektoren ausgebildet sind, liegt ihre Spiegelfläche senkrecht zur Rotationsachse 132 des Chopperrades 130. Zwischen diesen Spiegeln 134 befinden sich auf etwa gleichem Teilkreis Sektoren 136, die als einfache Durchbrüche 136 ausgebildet sind und zum Beispiel durch Ausstanzen hergestellt werden können. Die Spiegel 134 sind bevorzugt durch Aufdampfen einer reflektierenden Spiegelschicht auf das Chopperrad in dem entsprechenden Sektor hergestellt.

Damit ergibt sich folgende Funktionsweise: Wenn das Chopperrad 130 eine Drehstellung einnimmt, in der die Spiegel 134 sich im Strahlengang befinden (Fig. 1), wird das UV-Licht 106 abgelenkt, also für die Messstrecke 114 blockiert und das IR-Licht 108 sendeseitig in die Messstrecke 114 umgelenkt und gleichzeitig empfangsseitig mittels des gegenüberliegenden Spiegels 134 auf den zweiten Empfänger 128 umgelenkt. Wenn das Chopperrad 130 eine Drehstellung einnimmt, in der die Durchbrüche 136 sich im Strahlengang befinden, wird das IR-Licht 108 sendeseitig nicht in die gemeinsame optische Achse abgelenkt und geht entweder verloren oder wird für andere Zwecke genutzt. Das UV-Licht 106 wird sendeseitig ebenfalls durchgelassen und erreicht auf demselben optischen Weg wie zuvor das IR-Licht die Messstrecke 114. Empfangsseitig wird das UV-Licht wieder durchgelassen und trifft auf den ersten Empfänger 126.

Schließlich erfolgt in einer Auswerteeinheit 140, an die die beiden Empfänger 126 und 128 angeschlossen sind, eine Auswertung der Empfangssignale und daraus eine Bestimmung einer Gaskonzentration. Dies geschieht bevorzugt in einem Lock-In-Verfahren.

Fig. 1A zeigt eine bevorzugte Ausführungsform wie Fig. 1, wobei hier zusätzlich ein weiterer Umlenkspiegel 150A vorgesehen ist. Dieser Umlenkspiegel 150A dient zur Umlenkung, desjenigen Lichtes, welches je nach Stellung eines Chopperrades 130A gerade nicht in die Messstrecke 114 geführt wird. Das Chopperrad 130A für diese bevorzugte Ausführungsform, das in Fig. 2A dargestellt ist, muss neben der Reflexion von Licht mit den Spiegeln 134A und dem Durchlassen von Licht durch die Durchbrüche 136A auch Dunkelphasen erzeugen können, in denen kein Licht auf die Empfänger 126 und 128 gelangt, damit das Lock-In Verfahren zur Auswertung angewendet werden kann. Deshalb weist das Chopperrad 130A neben den Spiegeln 134A und den Durchbrüchen 136A Sektoren 138A auf, die sowohl das UV-Licht 106 als auch das IR-Licht 108 einfach blocken. Dabei sind die Sektoren, nämlich Spiegel 134A, Durchbrüche 136A und Sektoren 138A symmetrisch angeordnet.

Wenn also das UV-Licht 106 vom Chopperrad 130A durchgelassen wird und in die Messstrecke 114 gelangt, wird das IR-Licht 108 direkt auf den Umlenkspiegel 150A geführt und von diesem unter Umgehung der Messstrecke 114 auf den zugeordneten Empfänger 128 gelenkt. Dabei wird es vom Chopperrad 130A ein zweites Mal durchgelassen.

Analoges ergibt sich, für eine Winkelstellung des Chopperrades 130A, in der die Spiegel 134A sich im Strahlengang befinden. Dann wird das IR-Licht 108 in die Messstrecke gelenkt und das UV-Licht 106 auf den Umlenkspiegel 150A und weiter über den zweiten Spiegel 134A auf den zugeordneten Empfänger 126. Jetzt umgeht das UV-Licht 106 die Messstrecke.

Es versteht sich, dass dazu die Spiegel 134A auf beiden Seiten reflektieren müssen und zwar auf der einen Seite das IR-Licht 108 und auf der anderen Seite das UV-Licht 106. Außerdem muss die Auswerteeinheit 140 für eine entsprechende Nullpunktskorrektur eingerichtet sein. Über zeitliches Multiplexen können die einzelnen Signale getrennt werden und mittels Lock-In-Technik ausgewertet werden. Immer wenn mit einem Empfänger die Intensität über den Messpfad gemessen wird, registriert der andere Empfänger die Intensität über den Referenzpfad, also die Intensität des Lichts, das unter Umgehung der Messstrecke über den Umlenkspiegel 150A geführt wird, und umgekehrt.

In Fig. 3 ist eine andere Winkelanordnung der beiden Lichtquellen 302 und 304 zueinander, der beiden Empfänger 326 und 328 zueinander und dementsprechend des Chopperrades dargestellt. Es sind also auch andere als rechtwinklige Anordnungen möglich. Dadurch können möglicherweise andere Bauraumformen des gesamten Messgerätes 400 verwirklicht werden. Wiederum erfolgt die Zusammenführung und Trennung der spektralen Kanäle genauso wie im ersten Ausführungsbeispiel.

## Patentansprüche

1. Messgerät mit zwei spektralen Kanälen zur Bestimmung von Gaskonzentrationen mit einer ersten und einer zweiten Lichtquelle (102, 104; 302, 304), die Licht unterschiedlicher Wellenlängenbereiche in eine Messstrecke (114) senden, mit einer Empfangsanordnung (124), die das Licht der Lichtquellen (106, 108) empfängt, mit einer Choppervorrichtung (110), die zwei für einen der Wellenlängenbereiche hoch reflektierende Spiegel (134; 134A) und zwei auf gleichem Teilkreis zwischen den Spiegeln (134; 134A) liegende Durchbrüche (136; 136A) aufweist, zum wechselweise Durchlassen bzw. Umlenken des Lichts der Lichtquellen (102, 104; 302, 304), um das Licht auf den selben optischen Weg in die Messstrecke (114) zu bringen und mit einer Auswerteeinheit (140) zur Auswertung der Empfangssignale und Bestimmung einer Gaskonzentration daraus, wobei die Empfangsanordnung (124) einen ersten und einen zweiten Empfänger (126, 128; 326, 328) aufweist, wobei der erste Empfänger (126; 326) der ersten Lichtquelle (102; 302) und der zweite Empfänger (128; 328) der zweiten Lichtquelle (104; 304) zugeordnet ist zum Empfang des Lichts entsprechender Wellenlänge und wobei die Choppervorrichtung (110) auch Teil der Empfangsanordnung (124) ist und die Choppervorrichtung (110; 110A) das Licht nach Durchlaufen der Messstrecke (114) durch Umlenken bzw. Durchlassen von demselben optischen Weg (112) trennt und dem entsprechenden Empfänger (126 bzw. 128; 326 bzw. 328) zuordnet, **dadurch gekennzeichnet, dass** die Choppervorrichtung (110) als ein einziges Chopperrad (130; 130A) ausgebildet ist und die Spiegel (134; 134A) als Sektoren des Chopperrads (130; 130A) ausgebildet sind und die Spiegelflächen senkrecht zur Rotationsachse des Chopperrades (130; 130A) liegen.

2. Messgerät nach Anspruch 1, **dadurch gekennzeichnet, dass** die Spiegel durch Aufdampfen einer Spiegelschicht auf das Chopperrad hergestellt sind.

3. Messgerät nach einem der vorhergehenden Ansprüche, **dadurch gekennzeichnet, dass** hinter der Messstrecke ein Retroreflektor angeordnet ist und der Sendelichtpfad und der Empfangslichtpfad koaxial ausgebildet sind und ein Strahlteiler Sende- und Empfangslichtpfad trennt.

4. Messgerät nach einem der vorhergehenden Ansprüche, **dadurch gekennzeichnet, dass** eine der Lichtquellen UV-Licht abgibt und die andere IR-Licht und dass der jeweils zugeordnete Empfänger dazu ausgebildet ist, das UV-Licht bzw. IR-Licht zu empfangen.

5. Messgerät nach einem der vorhergehenden Ansprüche, **dadurch gekennzeichnet, dass** das Chopperrad punktsymmetrisch zu seiner Rotationsachse ausgebildet ist.

6. Messgerät nach einem der vorhergehenden Ansprüche, **dadurch gekennzeichnet, dass** sowohl die Spiegel als auch die Durchbrüche einander diametral gegenüberliegend angeordnet sind.

7. Messgerät nach einem der vorhergehenden Ansprüche, **dadurch gekennzeichnet, dass** die optischen Achsen der Lichtquellen senkrecht zueinander stehen.

## Claims

1. A measurement apparatus having two spectral channels for the determination of gas concentrations comprising:
- a first and a second light source (102, 104; 302, 304) which transmit light of different wavelength ranges into a measurement path (114);
- a receiver arrangement (124) which receives the light from the light sources (106, 108);
- a chopper apparatus (110) which comprises two highly reflecting mirrors (134; 134A) for one of the wavelength ranges and two cut-outs (136; 136A) between the mirrors on the same part circle in the circumferential direction in order to alternately allow the light from the light sources to pass through and/or to deflect the light from the light sources (102, 104) respectively in order to bring the light via the same optical path into the measurement path (114); and
- an evaluation unit (140) for the evaluation of the received signals and for the determination of a gas concentration therefrom,
wherein the receiver arrangement (124) has a first and a second receiver (126, 128; 326, 328), with the first receiver (126, 326) being associated with the first light source (102) and the second receiver (128; 328) being associated with the second light source (104) for the reception of the light of a corresponding wavelength range; and wherein the chopper apparatus (110) is also a part of the receiver arrangement (124) and the chopper apparatus (110) separates the light from the same optical path (112) following a passage along the measurement path (114) by deflection of light and/or by allowing the light to pass through and associates this with the corresponding receiver (126 or 128 respectively; 326 or 328 respectively)
**characterized in that**
the chopper apparatus (110) is designed as a single chopper wheel (130; 130A) and the mirrors (134; 134A) are formed as sectors of the chopper wheel (130; 130A) and the reflexion surfaces of the mirrors are perpendicular to the rotation axis of the chopper wheel (130; 130A).

2. The measurement apparatus in accordance with claim 1, **characterized in that** the mirrors are made by vapor deposition of a reflexion surface on the chopper wheel.

3. The measurement apparatus in accordance with any preceding claim, further comprising a retro-reflector arranged behind the measurement path, wherein a transmission light path and a received light path are configured coaxial and a beam splitter separates the transmission light path from the reception light path.

4. The measurement apparatus in accordance with any preceding claim, wherein one of the light sources transmits UV light and the other light source transmits IR light and wherein the respectively associated receiver is configured to receive the UV light and the IR light respectively.

5. The measurement apparatus in accordance with any preceding claim, wherein the chopper wheel is configured point-symmetrically with respect to its axis of rotation.

6. The measurement apparatus in accordance with any preceding claim, wherein the mirrors and the cut-outs are diametrically arranged each other.

7. The measurement apparatus in accordance with any preceding claim, wherein the light sources each have an optical axis and the optical axes of the light sources are arranged perpendicular to one another.

## Revendications

1. Dispositif de mesure comportant deux canaux spectraux pour la détermination de concentrations de gaz, comprenant:
- une première et une deuxième source de lumière (102, 104; 302, 304) qui transmettent de la lumière des gammes des longueurs d'onde différentes dans un chemin de mesure (114);
- un dispositif de réception (124) qui reçoit la lumière provenant des sources de lumière (106, 108);
- un dispositif de découpage (110) qui comprend deux miroirs hautement réfléchissants (134; 134A) pour l'une des gammes des longueurs d'onde ainsi que deux claquages (136; 136A) situés sur le même cercle primitif entre les miroirs (134; 134A), pour permettre à la lumière provenant des sources de lumière(102, 104 ; 302, 304) de passer à travers et / ou à dévier afin de diriger la lumière par le même trajet optique dans le trajet de mesure (114);
- et une unité d'évaluation (140) pour l'évaluation des signaux de réception et pour la détermination d'une concentration de gaz de celui-ci, dans lequel le dispositif de réception (124) comporte un premier et un deuxième récepteur (126, 128; 326, 328), avec le premier récepteur (126, 326) étant associé à la première source de lumière (102, 302) et le deuxième récepteur (128; 328) étant associé à la seconde source de lumière (104, 304) pour la réception de la lumière d'une longueur d'onde correspondante; et dans lequel le dispositif de découpage (110) est également une partie du dispositif de réception (124) et le dispositif de découpage (110) sépare la lumière du même chemin optique (112) par déviation de la lumière et / ou en permettant à la lumière de passer à travers après avoir passé à travers la section de mesure (114) et l'associe avec le récepteur correspondant (126 ou 128; 326 ou 328)
**caractérisé en ce que**
le dispositif de découpage (110) est réalisé sous la forme d'une seule roue de découpage (130; 130A) et les miroirs (134; 134A) sont formés comme des secteurs de la roue de découpage (130; 130A) et les surfaces de réflexion des miroirs sont perpendiculaires à l'axe de rotation de la roue de découpage (130; 130A).

2. Dispositif de mesure selon la revendication 1, **caractérisé en ce que** les miroirs sont réalisés par dépôt en phase vapeur d'une surface de réflexion sur la roue de découpage.

3. Dispositif de mesure selon l'une quelconque des revendications précédentes, **caractérisé en ce qu'**un rétro-réflecteur est disposé derrière la section de mesure, et le chemin de la lumière de transmission et le chemin de la lumière reçue sont configurés coaxial et un séparateur de faisceau sépare le chemin de la lumière de transmission du chemin la lumière de réception.

4. Dispositif de mesure selon l'une quelconque des revendications précédentes, **caractérisé en ce qu'**une des sources de lumière émet de la lumière UV et l'autre source émet de la lumière infrarouge et le récepteur respectivement associé est configuré à recevoir la lumière UV ou la lumière infrarouge.

5. Dispositif de mesure selon l'une quelconque des revendications précédentes, **caractérisé en ce que** la roue de découpage est configuré de point symétrique par rapport à son axe de rotation.

6. Dispositif de mesure selon l'une quelconque des revendications précédentes, **caractérisé en ce que** les miroirs ainsi que les claquages sont disposés diamétralement opposé l'un à l'autre.

7. Dispositif de mesure selon l'une quelconque des revendications précédentes, **caractérisé en ce que** les axes optiques des sources de lumière sont disposés perpendiculairement les uns aux autres.
